Europäisches Patentamt

European Patent Office

Office européen des brevets

(19)

(11) Veröffentlichungsnummer: **0 025 094**
**A1**

(12) **EUROPÄISCHE PATENTANMELDUNG**

(21) Anmeldenummer: **80103841.5**

(22) Anmeldetag: **07.07.80**

(51) Int. Cl.³: **B 01 F 15/04**
**//B29D27/02**

(30) Priorität: **18.07.79 DE 2928915**

(43) Veröffentlichungstag der Anmeldung:
**18.03.81 Patentblatt 81/11**

(84) Benannte Vertragsstaaten:
**BE CH DE FR GB IT LI NL**

(71) Anmelder: **BAYER AG**
**Zentralbereich Patente, Marken und Lizenzen**
**D-5090 Leverkusen 1, Bayerwerk(DE)**

(72) Erfinder: **Ersfeld, Heinrich**
**Biesenbach 11**
**D-5090 Leverkusen 31(DE)**

(54) Injektionsmischkopf.

(57) Um bei Mischköpfen zur Herstellung von fließfähigen Reaktionsgemischen aus fließfähigen Reaktionskomponenten das zeitsynchrone Eintreten dieser Komponenten in die Mischkammer (6) zu gewährleisten, ist ein in der Gehäusebohrung (4) des Mischkopfes (1) hin und her bewegbarer Kolben (5) verdrehbar und in der gewünschten Drehstellung fixierbar, wobei seine die Mischkammer (6) begrenzende Stirnfläche (22) zur Längsachse des Kolbens geneigt ist.

FIG.2

BAYER AKTIENGESELLSCHAFT    5090 Leverkusen, Bayerwerk
Zentralbereich    Mr/bc/c
Patente, Marken und Lizenzen


Injektionsmischkopf


Die Erfindung richtet sich auf einen Injektionsmischkopf zum Vermischen fließfähiger Komponenten zu einem
fließfähigen, Massiv- oder Schaumstoff bildenden Gemisch,
bestehend aus einem Gehäuse, das eine Bohrung aufweist,
die als Führung für einen hin und her bewegbaren Kolben
sowie teils als Mischkammer, die mittels des Kolbens
verdrängbar ist, dient, wobei Eintrittsöffnungen für
die Komponenten in die Mischkammer münden.

Die Druck- sowie die Vor- und Nachlaufeinstellungen der
Reaktionskomponenten bereiten trotz Einführung der sogenannten zwangsgesteuerten Mischköpfe immer noch erhebliche Schwierigkeiten, was nicht zuletzt darauf beruht, daß die Anforderungen an die Qualität der zu produzierenden Fertigteile laufend steigen.

Beim zwangsweisen Öffnen zweier Injektionsdüsen tritt
die niedrigviskosere Komponente entschieden schneller
in die Mischkammer ein als die höherviskose, was zwangsläufig Fehlerstellen im Fertigteil nach sich zieht.


Le A 19 715

- 2 -

Bei den herkömmlichen Mischköpfen müssen dann die Injektionsdüsen so lange einreguliert werden, bis ein vorlauffreies Eintreten in die Mischkammer vorhanden ist. Das heißt, daß der Arbeitsdruck der niedrigviskosen Komponente herabgesetzt bzw. der Arbeitsdruck der höherviskosen Komponente gesteigert werden muß. Diese Einstellvorgänge sind schwierig und zeitraubend. Weiterhin müssen die Injektionsdüsen aber auch häufig aufgrund unterschiedlicher Mengendurchsätze verschiedene Querschnitte aufweisen. Auch hierfür sind umständliche Umrüst- und Einstellarbeiten notwendig. Auch die sogenannten Steuerkolbenmischköpfe sind an den Eintrittsöffnungen in die Mischkammer mit Düsen bestückt, um einen synchronen Eintritt der Komponenten durch Einregulierung zu gewährleisten. Dadurch werden im Zuleitungssystem unerwünschte Druckverluste erzeugt.

Es gilt deshalb, einen Mischkopf zu schaffen, der eine schnelle und sichere Einstellung des synchronen Eintritts der Komponenten in die Mischkammer ermöglicht, um ein einwandfreies Fertigprodukt zu erzielen. Außerdem sollen die Druckverluste im Zuleitungssystem möglichst gering gehalten werden.

Diese Aufgabe wird gemäß der Erfindung dadurch gelöst, daß

a) die die Mischkammer begrenzende Stirnfläche des Kolbens zu dessen Längsachse eine Neigung aufweist, und

Le A 19 715

b) mindestens die Stirnfläche in Bezug auf die Eintrittsöffnungen um die Längsachse des Kolbens verdrehbar ist.

Dadurch wird erreicht, daß durch Verdrehen des Kolbens die eine der Eintrittsöffnungen eher freigegeben werden kann als die andere und/oder daß der Öffnungsquerschnitt der einen Eintrittsöffnung größer ist als der der anderen. Zieht man noch in Betracht, daß der Kolben gleichzeitig neben der Drehbewegung bei entsprechender Konstruktion eine geringe Hubbewegung ausführen kann, um den freien Querschnitt der Eintrittsöffnungen einzustellen, so ergeben sich praktisch unbegrenzte Einstellmöglichkeiten. Die Neigung der Stirnfläche braucht dabei nicht unbedingt eben oder einheitlich zu sein. Es kann sich auch um eine gewölbte Fläche handeln, die darüber hinaus noch stellenweise besondere räumliche Konturierungen aufweist, um besondere Strömungseffekte zu verursachen. Wenn man bei dem erfindungsgemäßen Mischkopf auf Injektionsdüsen verzichtet, wird der Druckverlust in den Zuleitungen besonders gering gehalten, denn ein solcher tritt in vergleichsweise geringem Maße erst unmittelbar an der Kante der Eintrittsöffnung bzw. an der Kante der Stirnfläche des Kolbens auf.

Die Stirnfläche des Kolbens selbst kann in der angegebenen Weise gestaltet sein. Nach einer besonderen Ausführungsform jedoch ist es vorteilhaft, daß der Kolben an seinem zur Mischkammer weisenden Ende einen verdrehbaren Kopf trägt, dessen Stirnfläche die Neigung zur Längsachse des Kolbens aufweist.

- 4 -

Bei dieser Ausführungsform sollte der Kolben selbst unverdrehbar geführt sein und der beispielsweise durch eine in der Längsachse des Kolbens vorgesehene Schraube gehaltene Kopf ist nach Lösen der Schraube um diese drehbar. Sind die aufeinanderliegenden Flächen des eigentlichen Kolbens und des Kopfes glatt, so läßt sich der Kopf stufenlos verdrehen. Eine ineinandergreifende Stirnverzahnung dieser beiden Flächen läßt zwar nur ein stufenweises Verstellen entsprechend der Verzahnung zu, die Einstellung jedoch wird durch das Einrasten der Verzahnung sicherer.

Nach einer weiteren besonderen Ausführungsform des erfindungsgemäßen Mischkopfes trägt das zur Mischkammer weisende Ende des Kolbens einen austauschbaren Kopf, dessen Stirnfläche die Neigung zur Längsachse des Kolbens aufweist. Diese Austauschbarkeit des Kopfes ermöglicht ohne allzu große Schwierigkeiten je nach Bedarf Köpfe mit dem jeweiligen Zweck angepaßter Neigung der Stirnfläche bzw. Konturierung derselben zu verwenden.

Eine besondere, günstige konstruktive Ausführungsform ist dadurch gekennzeichnet, daß der Kolben in einer Büchse unverdrehbar geführt, die Büchse jedoch verdrehbar und in jeder gewünschten Stellung fixierbar ist. Dabei weisen Kolben und Büchse vorzugsweise eine gemeinsame Nut- und Federführung auf.

Mittels dieser Konstruktion läßt sich der Kolben zeitversetzt oder auch gleichzeitig längsbewegen und ver-

Le A 19 715

drehen.

Die Erfindung läßt also einerseits zu, durch Verdrehen der Stirnfläche mittels des Kopfes bzw. des Kolbens und durch Justieren in dieser Stellung den Mischkopf auf das jeweils zu verarbeitende Gemisch einmalig einzustellen. Andererseits ist es aber auch möglich, den Kolben während des Einspritzvorganges, insbesondere zu dessen Beginn und zu dessen Ende, mittels programmgesteuerter Antriebe längszuverschieben und/oder zu verdrehen. Dadurch ist es möglich, die Einströmquerschnitte der Eintrittsöffnungen nicht nur über die Zeit gesehen, sondern auch zueinander zu variieren.

Vorzugsweise weist die Stirnfläche eine Neigung $\alpha$ von 20 bis 88° zur Längsachse des Kolbens auf. Ein bevorzugter Bereich liegt etwa zwischen 55 und 80°, insbesondere um 70°.

Ist der Injektionsmischkopf mit einem Formwerkzeug kombiniert, so liegt vorzugsweise die Stirnfläche des Kolbens bei verdrängter Mischkammer mit der Wandung des Hohlraumes des Formwerkzeuges im Bereich der Auslaßöffnung der Mischkammer in einer Ebene.

Auf diese Weise ist trotz der geneigten Stirnfläche die angußmarkenfreie Herstellung von Formteilen möglich.

Um dies auch für verschiedene Drehstellungen der Stirnfläche zu gewährleisten, ist vorzugsweise der Kolben

Le A 19 715

- 6 -

so geführt, daß er, beispielsweise durch Führung entlang einer Schraubenlinie, in diese Stellung gebracht werden kann oder die Eintrittsöffnungen sind in einem Ring gelagert, der entsprechend verdrehbar ist, während der Kolben unverdrehbar bleibt. Die letztere Ausführungsform wäre also nur eine Inversion.

Die Erfindung ist auch für Mischköpfe anwendbar, deren Steuerkolben Rückflußnuten aufweisen. Hierbei ist jedoch darauf zu achten, daß die Rückflußnuten in jeder Drehstellung des Kolbens in dessen Rezirkulationsstellung einerseits mit den Eintrittsöffnungen und andererseits mit den Rücklaufleitungen in Verbindung bleiben. Dies heißt für die Praxis, daß die Rücklaufnuten entsprechend breit gestaltet sein müssen oder sich in Umfangsrichtung erstreckende Ringabschnitte aufweisen müssen.

Derartige Mischköpfe eignen sich insbesondere zur Herstellung von Zwei- oder Mehrkomponentenwerkstoffen, die beispielsweise massives oder geschäumtes Polyurethan bilden, ungesättigte Polyesterharze, Epoxidharze und Polyamide.

In der Zeichnung ist der erfindungsgemäße Injektionsmischkopf in mehreren Ausführungsbeispielen rein schematisch dargestellt und nachstehend näher erläutert. Es zeigen:

Le A 19 715

Figur 1    einen ersten Mischkopf im Schnitt gemäß Linie
A-B in Figur 3,

Figur 2    den Mischkopf in Schnitt gemäß Linie C-D in
Figur 1,

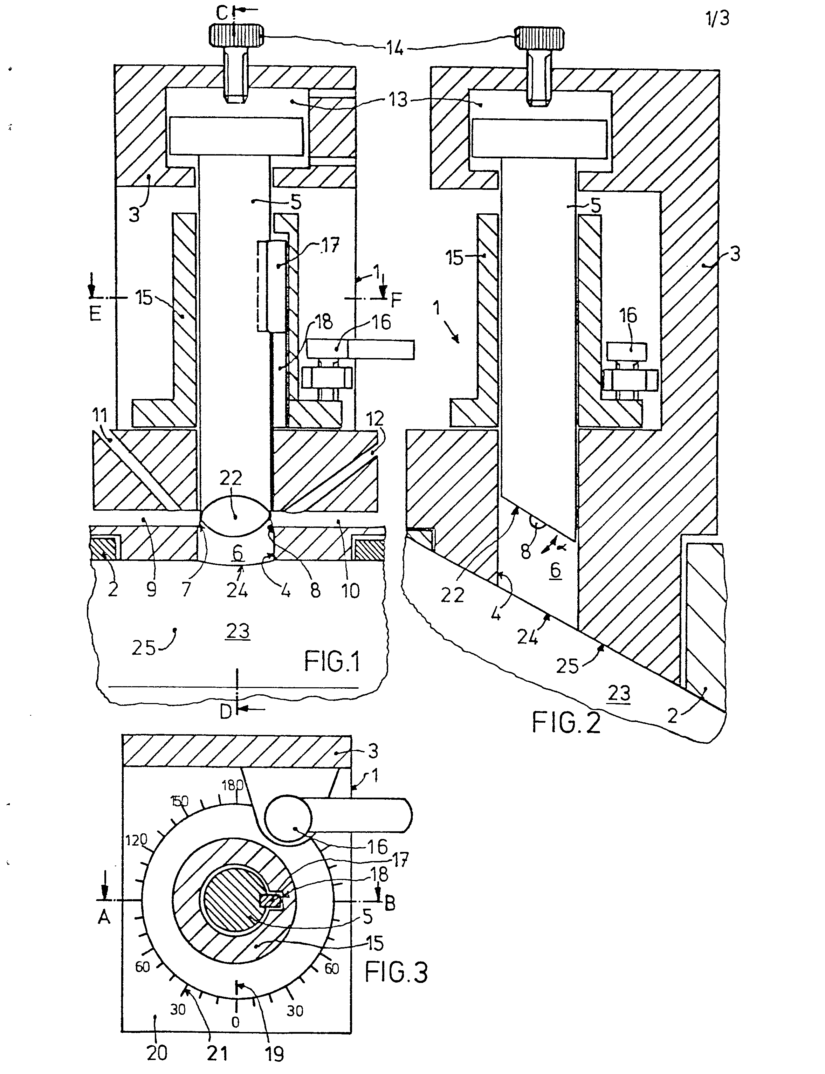

Figur 3    den Mischkopf im Schnitt gemäß Linie E-F in
Figur 1,

Figuren 4
bis 9    verschiedene Stellungen der geneigten Stirnfläche des Kolbens im Bezug auf die Eintrittsöffnungen,

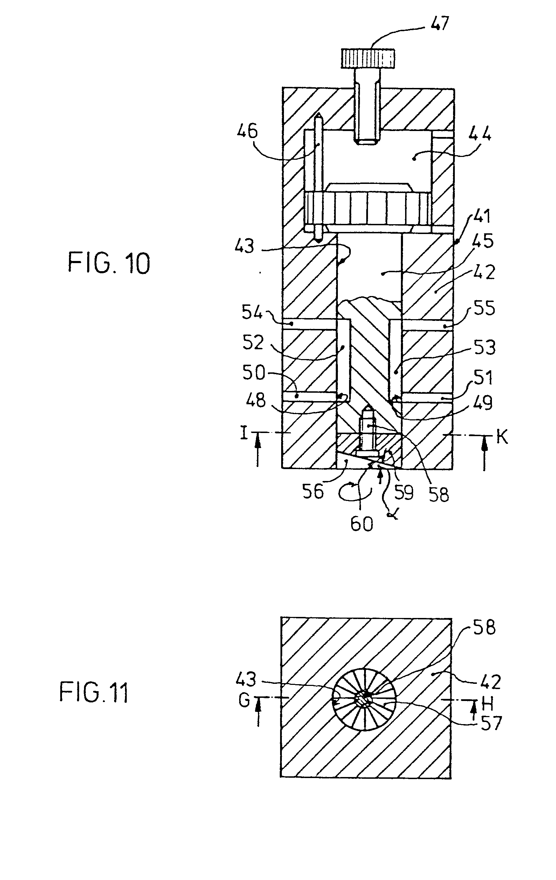

Figur 10    einen zweiten Mischkopf im Schnitt gemäß Linie
G-H in Figur 11 und

Figur 11    den Mischkopf im Schnitt gemäß Linie I-K in Figur
10.

In Figuren 1, 2, 3 ist ein Mischkopf 1 mit einem angedeuteten Formwerkzeug 2 kombiniert. Das Gehäuse 3 des
Mischkopfes 1 umschließt eine Bohrung 4, deren oberer
Teil als Führung für einen Kolben 5 dient und deren
unterer Teil bei Arbeitsstellung des Kolbens 5 die
Mischkammer 6 bildet. Durch deren Wandung münden Eintrittsöffnungen 7,8 zu denen Zuleitungen 9,10 führen.
Rücklaufleitungen 11,12 zweigen vor den Eintrittsöffnungen 7,8 ab, die Umschaltorgane von Vorlauf auf Rücklauf sind nicht dargestellt. Der Kolben 5 ist in der
Kammer 13 hydraulisch steuerbar. Sein maximal einstellbarer Hub ist durch eine Stellschraube 14 begrenzbar.
Das Gehäuse 3 ist jochartig ausgeführt. In dem freien
Teil ist eine Führungsbüchse 15 für den Kolben 5 vorgesehen, die mittels einer Klemmschraube 16 gegen Verdrehen gesichert werden kann. Der Kolben 5 ist mittels

- 8 -

einer Feder 17 in einer Längsnut 18 der Büchse 15 geführt. Die Büchse 15 trägt eine Markierung 19, die
mit einer auf der Fläche 20 angebrachten Gradskala 21
korrespondiert. Dadurch läßt sich die gewünschte Drehstellung einstellen und die Büchse 15 durch Feststellen der Klemmschraube 16 in der gewünschten Stellung
justieren. Der Kolben 5 weist eine unter dem Winkel $\alpha$
von 50° zu seiner Längsachse geneigte Stirnfläche 22
auf. Die in den angedeuteten Formhohlraum 23 weisende
Austrittsöffnung 24 der Mischkammer 6 ist von einem
Wandungsbereich 25 umgeben, der parallel zur Stirnfläche 22 liegt, so daß in der Ausstoß-Stellung, wenn
der Kolben 5 die Mischkammer 6 gereinigt hat und sie
ausfüllt, die Stirnfläche 22 mit dem Wandungsbereich
25 eine Ebene bildet.

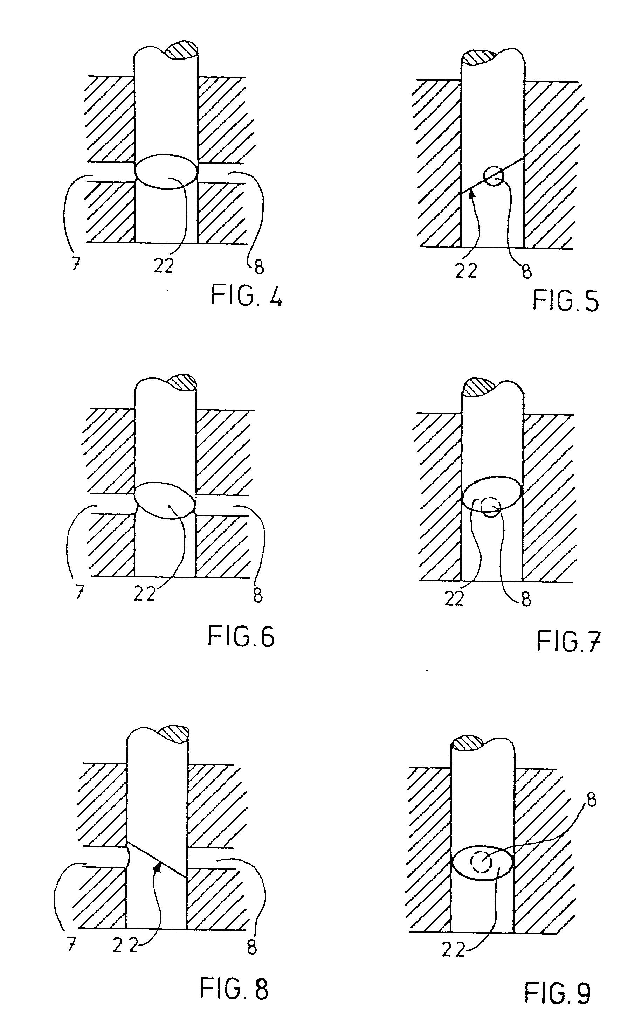

In Figur 4,5 - die Figuren sind zueinander um 90° versetzt - deckt die Kante der Stirnfläche 22 beide Eintrittsöffnungen 7,8 symmetrisch ab.

In Figur 6,7 - auch hier die Figuren um 90° versetzt -
ist eine asymmetrische Abdeckung der Eintrittsöffnungen 7,8 durch die Kante der Stirnfläche 22 ersichtlich.

In Figur 8,9 - die Figuren sind gleichfalls um 90°
versetzt - ist die Eintrittsöffnung 7 voll geöffnet,
während die Eintrittsöffnung 8 völlig verschlossen
ist.

Le A 19 715

In Figuren 10,11 besteht der Mischkopf 41 aus einem Gehäuse 42, das eine Bohrung 43 aufweist und in der ein in der Kammer 44 hydraulisch betätigbarer Kolben 45 geführt ist. Der Kolben 45 ist mittels eines Führungsstiftes 46 gegen Verdrehen gesichert. Der gewünschte Hub des Kolbens 45 ist durch eine Stellschraube 47 begrenzbar. Zu den Eintrittsöffnungen 48,49 führen Zuleitungen 50,51. In der gezeigten Stellung des Kolbens 45 sind diese über im Kolben 45 angeordnete Rücklaufnuten 52,53 mit Rücklaufleitungen 54,55 verbunden. Die Mischkammer 56 ist fast völlig vom Kolben 45 ausgefüllt. Sein zur Mischkammer 56 weisendes Ende ist mit einer Stirnverzahnung 57 (Figur 11), in die eine Gegenverzahnung (nicht dargestellt) des mittels einer Schraube 58 am Kolben 45 gehaltenen Kopfes 59 eingreift. Die die Mischkammer 56 begrenzende Stirnfläche 60 des Kopfes 59 schließt mit der Längsachse des Kolbens 56 den Winkel $\chi$ von 70° ein.

Le A 19 715

Patentansprüche

1) Injektionsmischkopf zum Vermischen fließfähiger Komponenten zu einem fließfähigen, Massiv- oder Schaumstoff bildenden Gemisch, bestehend aus einem Gehäuse, das eine Bohrung aufweist, die als Führung für einen hin und her beweglichen Kolben sowie teils als Mischkammer, die mittels des Kolbens verdrängbar ist, dient, wobei Eintrittsöffnungen für die Komponenten in die Mischkammer münden, dadurch gekennzeichnet, daß

a) die die Mischkammer (6,56) begrenzende Stirnfläche (22,60) des Kolbens (5,45) zu dessen Längsachse eine Neigung aufweist,

b) mindestens die Stirnfläche (6,56) in Bezug auf die Eintrittsöffnungen (7,8;50,51) um die Längsachse des Kolbens (5,45) verdrehbar ist.

2) Injektionsmischkopf nach Anspruch 1, dadurch gekennzeichnet, daß das zur Mischkammer (56) weisende Ende des Kolbens (45) einen verdrehbaren Kopf (59) trägt, dessen Stirnfläche (60) die Neigung zur Längsachse des Kolbens (45) aufweist.

3) Injektionsmischkopf nach Ansprüchen 1 oder 2, dadurch gekennzeichnet, daß das zur Mischkammer (56) weisende Ende des Kolbens (45) einen austauschbaren Kopf (59) trägt, dessen Stirnfläche (60) die Neigung zur Längsachse des Kolbens (45) aufweist.

Le A 19 715

4) Injektionsmischkopf nach Ansprüchen 1 bis 3, dadurch gekennzeichnet, daß der Kolben (5) in einer Büchse (15) unverdrehbar geführt, die Büchse (15) jedoch verdrehbar und in jeder gewünschten Stellung fixierbar ist.

5) Injektionsmischkopf nach Anspruch 4, dadurch gekennzeichnet, daß Kolben (5) und Büchse (15) eine gemeinsame Nut- und Federführung (17,18) aufweisen.

6) Injektionsmischkopf nach Anspruch 1 bis 5, dadurch gekennzeichnet, daß die Stirnflächen (22,60) eine Neigung $\alpha$ von 20 bis 88° zur Längsachse des Kolbens (5,45) aufweist.

7) Injektionsmischkopf nach Anspruch 1 bis 6, in Kombination mit einem Formwerkzeug, dadurch gekennzeichnet, daß die Stirnfläche (22) des Kolbens (5) bei verdrängter Mischkammer (6) mit der Wandung (25) des Formhohlraumes (23) des Formwerkzeuges (2) im Bereich der Auslaßöffnung (24) der Mischkammer (6) in einer Ebene liegt.

Le A 19 715

0025094

1/3

FIG.1

FIG.2

FIG.3

FIG. 4

FIG. 5

FIG. 6

FIG. 7

FIG. 8

FIG. 9

FIG. 10

FIG. 11

| Europäisches Patentamt | **EUROPÄISCHER RECHERCHENBERICHT** | Nummer der Anmeldung |
|---|---|---|
| | | EP 80 10 3841.5 |

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | <u>DE - A - 2 108 289</u> (ANKERWERK NÜRNBERG)<br><br>* Anspruch 1; Fig. 3 *<br><br>---- | 1 | B 01 F 15/04<br>//B 29 D 27/02 |

**RECHERCHIERTE SACHGEBIETE (Int. Cl.3)**

B 01 F 15/04
B 29 D 27/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| | Der vorliegende Recherchenbericht wurde für alle Patentansprüche erstellt. |
|---|---|

| Recherchenort | Abschlußdatum der Recherche | Prüfer |
|---|---|---|
| Berlin | 21-11-1980 | KÜHN |

EPA form 1503.1   06.78